(19) Europäisches Patentamt

European Patent Office

Office européen des brevets

(11) **EP 0 742 784 B1**

(12) **FASCICULE DE BREVET EUROPEEN**

(45) Date de publication et mention
de la délivrance du brevet:
**28.11.2001 Bulletin 2001/48**

(21) Numéro de dépôt: **95907722.3**

(22) Date de dépôt: **31.01.1995**

(51) Int Cl.$^7$: **C05D 3/02**, C05F 7/00

(86) Numéro de dépôt international:
**PCT/FR95/00109**

(87) Numéro de publication internationale:
**WO 95/20552 (03.08.1995 Gazette 1995/33)**

(54) **PROCEDE DE CONDITIONNEMENT DE BOUES**

VERFAHREN ZUM KONDITIONIEREN VON SCHLÄMMEN

SLUDGE CONDITIONING METHOD

(84) Etats contractants désignés:
**AT BE CH DE DK ES FR GB GR IT LI LU NL PT**

(30) Priorité: **31.01.1994 FR 9401019**

(43) Date de publication de la demande:
**20.11.1996 Bulletin 1996/47**

(73) Titulaire: **Legal, Michel**
**33740 Arès (FR)**

(72) Inventeur: **Legal, Michel**
**33740 Arès (FR)**

(74) Mandataire: **Peaucelle, Chantal et al**
**Cabinet Armengaud Aine**
**3, avenue Bugeaud**
**75116 Paris (FR)**

(56) Documents cités:
**DE-A- 4 304 342      FR-A- 691 129**
**US-A- 4 264 543**

**Description**

L'invention a pour objet un procédé de conditionnement de boues afin de les rendre manipulables et utilisables par exemple en agriculture.

Ces boues résultent, d'une manière générale, du traitement des effluents industriels, des eaux et produits résiduaires d'origine industrielle, agricole, domestique ou autres.

Elles sont formées d'éléments solides en mélange avec une phase liquide, généralement de l'eau, et présentent des consistances variées, liquides, pâteuses ou sous forme de magmas.

Les difficultés de manipulation dues entre autres à leur caractère collant se posent plus particulièrement lorsqu'elles sont pâteuses ou sous forme de magmas.

Diverses méthodes de traitement ont été proposées pour les rendre manipulables. Elles sont essentiellement basées sur l'addition de liants organiques ou minéraux capables d'absorber ou de séquestrer l'eau que contiennent les boues.

Ainsi, l'utilisation comme liant de sulfate de calcium, sous diverses formes, est rapportée dans plusieurs publications.

On rappelle que sous sa forme naturelle, appelée gypse, le sulfate de calcium est cristallisé avec deux molécules d'eau et correspond à la formule $SO_4Ca, 2H_2O$. Il est également sous forme de dihydrate dans les gypses résiduaires, déchets de fabrication de produits chimiques divers comme l'acide phosphorique, l'acide citrique, l'oxyde de titane et autres.

Il se présente également sous forme d'anhydrites .

Cristallisé avec 1/2 molécule d'eau par molécule de sulfate ($SO_4Ca, 1/2 H_2O$), il est largement utilisé pour la fabrication de plâtre et désigné par le terme semi-hydrate.

Il existe deux formes cristallines de'semihydrate, la forme alpha et la forme bêta.

En présence d'eau, le semi-hydrate recristallise sous la forme dihydrate, suivant l'équation

$$SO_4Ca, 1/2 H_2O + 3/2 H_2O \longrightarrow SO_4Ca, 2H_2O$$

Cette réaction d'hydratation s'accompagne, dans certaines conditions physiques et mécaniques, de la formation d'un matériau solide, indéformable, d'une certaine humidité au moment de sa formation et avant tout séchage naturel ou artificiel, et de caractéristiques mécaniques, une fois sec, variables avec les conditions de sa formation.

Le paramètre essentiel de ce processus est le taux de gâchage qui désigne le rapport pondéral de l'eau au semi-hydrate en présence.

$$\text{Le taux de gâchage TG} = \frac{\text{masse de l'eau}}{\text{masse du semi-hydrate}}$$

Les applications industrielles du semi-hydrate se sont le plus généralement développées en utilisant des taux de gâchage inférieurs à 0,8.

Dans ces cas, le mélange eau-semi-hydrate se présente sous forme d'une pâte plus ou moins épaisse, dont la consistance croit à raison de l'avancement du phénomène de prise, jusqu'à donner naissance à un matériau solide, humide tel qu'évoqué plus haut.

Le taux de gâchage limite $\tau$, dont il sera question dans la suite de la description, correspond au taux de gâchage à partir duquel se produit une séparation en deux phases et une sédimentation de la partie semi-hydrate en cours de prise et du dihydrate formé. Pour le semi-hydrate alpha, la valeur de $\tau$ est de 0,7.

L'utilisation de semi-hydrates pour traiter des matières polluantes comme le pétrole ou les eaux résiduaires a été décrite par exemple dans la demande EP 0 006 776 au nom de Tillie. Le semi-hydrate, utilisé notamment sous forme alpha, est brassé dans le liquide à traiter ou mélangé, en opérant en continu, au moment du remplissage d'un bassin avec la boue.

Après décomposition et décantation de la suspension, l'eau libre des particules séquestrées rassemblées au fond en un gâteau solidifié est recueillie et le gâteau est extrait.

Des taux de gâchage de l'ordre de 0,3 sont préconisés.

Cette technique présente l'inconvénient de nécessiter l'emploi de grandes quantités de semi-hydrate et, le cas échéant, de moyens de mélange particuliers, à savoir, par exemple, des malaxeurs puissants.

Pour les boues les plus courantes, de siccité 0,03, ce type de méthode exige des consommations de semi-hydrate de l'ordre de 50 à 200 fois la masse de matière sèche contenue dans la boue.

L'invention a pour but de remédier à ces inconvénients en fournissant un procédé de conditionnement de boue par mélange avec du semi-hydrate alpha, dans lequel la consommation de semi-hydrate alpha est considérablement réduite par rapport aux méthodes proposées jusqu'à présent.

Le terme semi-hydrate tel qu'utilisé dans la description et les revendications désigne le seul semi-hydrate alpha à moins d'indications contraires.

Ce procédé s'applique à des boues de toute siccité, la siccité d'une boue étant sa teneur en matières sèches exprimée en pourcentage, par rapport à la masse de la boue, ou en nombre.

Pour apprécier les boues selon l'invention, elles seront définies par la capacité de la matière sèche (matière solide) les constituant à retenir une partie de la phase liquide (eau en général) qu'elles contiennent.

Ainsi, une boue $B_o$, de siccité $s_o$, sera également caractérisée par un nombre désigné par la lettre "$\rho$" et tel que la quantité d'eau retenue par la matière sèche de la boue (soit e), après avoir subi une action tendant à la concentrer (c'est-à-dire à en séparer une partie de l'eau qu'elle contient, par exemple décantation, filtration...) soit

$$e = \rho \, s_o.$$

A partir du moment où des boues sont soumises toujours aux mêmes conditions pour en séparer une partie de leur eau, cette caractéristique devient spécifique de la boue testée, permettant au technicien de comparer quantitativement plusieurs boues entre elles.

Le procédé de conditionnement de boue de l'invention, qui comprend le mélange de la boue à traiter avec du semi-hydrate alpha, est caractérisé en ce qu'on utilise, dans l'étape de mélange, une masse P de semi-hydrate alpha correspondant, par rapport à l'unité de masse de la boue, au moins à celle donnée par la relation

$$P = k_m s$$

dans laquelle s représente la valeur de la siccité de la boue et km représente la quantité minimale de semi-hydrate, cette quantité étant obtenue en mesurant la retenue $\rho$ d'eau de la boue dans les conditions de pression choisies, et en utilisant la relation

$$k_m = \frac{\rho}{0,7}$$

étant entendu que la quantité de semi-hydrate, par unité de matière sèche contenue dans la boue, doit être inférieure à 10, et que le temps séparant la mise en contact de la boue et du semi-hydrate alpha lors de l'étape de mélange, de la fin du processus, est inférieur au temps de prise du semi-hydrate,

- on injecte le mélange homogène de semi-hydrate et de boue, tel que défini ci-dessus, dans un dispositif comportant au moins une chambre de compactage permettant l'application d'une pression au mélange introduit et l'évacuation d'eau,
- on applique une pression pour compacter le mélange et expulser l'eau, en opérant avantageusement selon les conditions utilisées pour déterminer $\rho$,
- on récupère le produit mis en forme par le compactage,

le temps séparant la mise en contact de la boue et du semi-hydrate lors de l'étape de mélange, de la fin du compactage, étant inférieur au temps de prise du semi-hydrate.

La valeur de 0,7 dans la relation $k_m = \frac{\rho}{0,7}$ correspond au taux de gâchage limite du semi-hydrate alpha évoqué plus haut.

La référence dans ce qui précède au temps de fin de prise du semi-hydrate doit s'entendre par rapport aux conditions où se trouve le semi-hydrate, qui comprennent les conditions chimiques dues aux effets modificateurs de prise éventuellement provoqués par les constituants, même en faible proportions, de la boue traitée, les conditions de température (une élévation de température ayant pour conséquence de ralentir le phénomène de prise du semi-hydrate.

La boue mise en oeuvre dans l'étape de mélange présente un caractère plus ou moins floculé, éventuellement obtenu par addition de produits à effets floculants ou coagulants.

Le produit fini obtenu se présente sous forme de çomprimés, donc solide, rigide, aisément manutentionnable et stockable. Il présente également l'intérêt d'être en équilibre d'humidité avec le milieu extérieur, son taux d'humidité étant d'environ 10 %.

On observera de plus, que le procédé d'obtention de ce produit ne met en jeu, de manière avantageuse, que des outils et engins courants en matière de matériaux granulaires.

Selon les caractéristiques mécaniques souhaitées pour le produit fini, on utilisera le semi-hydrate alpha en léger excès par rapport à la quantité minimale définie ci-dessus.

Pour obtenir à partir d'une boue de retenue ρ (et quelle que soit sa siccité), un produit de mêmes caractéristiques mécaniques, on utilisera une quantité de semi-hydrate alpha d'autant plus faible et voisine de la quantité minimale théorique (définie par $k_m$), que la retenue d'eau du semi-hydrate sera grande et donc que le temps séparant l'instant du mélange de celui de l'application de la pression sera grand ;

Ceci cependant à condition que le mélange ait conservé son homogénéité (entretenue par une agitation douce permanente par exemple), pour éviter la prise en masse du magma, lui donnant une rigidité suffisante pour s'opposer à l'effet de la pression imposée et destinée à expulser l'eau à raison, justement, de la retenue d'eau du semi-hydrate en cours d'hydratation.

De manière avantageuse, on utilise le semi-hydrate selon un excès correspondant à une valeur de k pouvant aller jusqu'à 1,5 fois la valeur de km.

Dans une variante de réalisation de l'invention, le semi-hydrate alpha est utilisé sous forme de pulpe, c'est-à-dire de boue formée de semi-hydrate et d'eau.

On sait que dans ce cas, si l'on veut conserver au sulfate sa forme de semi-hydrate, il faut conserver cette pulpe à une température supérieure à 100°C ou tenir compte de son hydratation qui reste cependant très lente, tant que la température ne descend pas au-dessous de valeurs moyennes, de l'ordre de 50 à 60°C.

Il est donc possible de réaliser le mélange semi-hydrate-boue, en mélangeant à la boue, une pulpe de semi-hydrate, ramenée avant le mélange à une température lui conférant une cinétique de prise adaptée au processus de mélange-compactage (ce qui donne un moyen d'action supplémentaire- sur la cinétique de prise du mélange, permettant, en particulier d'allonger le "temps d'attente" du mélange avant d'être compacté).

Selon encore une autre variante, on utilise des semi-hydrates issus de gypses résiduaires, tels que les phosphogypses, citrogypses, titanogypses et autres, ce qui présente l'avantage d'utiliser des déchets industriels sources de pollution.

Après expulsion de l'eau, le système initial semi-hydrate-boue évolue vers un état final assimilable à un mortier dans lequel des grains de magma de semi-hydrate en cours d'hydratation, rapidement rigides, constituent un agrégat qui est lié par le dihydrate formé par l'excès de semi-hydrate présent.

L'ensemble donne ainsi naissance à un matériau encore en évolution (jusqu'à la fin de la prise du semi-hydrate), constitué comme un mortier en cours de prise, acquérant rapidement des caractéristiques mécaniques suffisantes pour être manutentionné, manipulé comme un produit solide.

On obtient un matériau dont les parties agrégats sont nettement visibles et individualisables, légèrement collées les unes aux autres par un liant fragile de type plâtre. De manière avantageuse, ce matériau est facilement délitable.

Les produits ainsi obtenus sont utilisables pour l'amendement et/ou la fertilisation des sols. Ils constituent des amendements calciques et/ou sulfatés, comportant en supplément un caractère fertilisant du fait de leur teneur en matière organique et/ou azotée, apportée par la matière sèche de la boue d'origine.

Ils peuvent constituer des vecteurs diluants pour des principes actifs ajoutés, par exemple, aux mélanges, en cours de traitement. Comme principes actifs, on citera de la potasse et des oligo-éléments. On obtient alors des produits dopés, c'est-à-dire enrichis en éléments d'intérêt.

Le caractère délitable de ces produits conduit à une absorption aisée dans le sol.

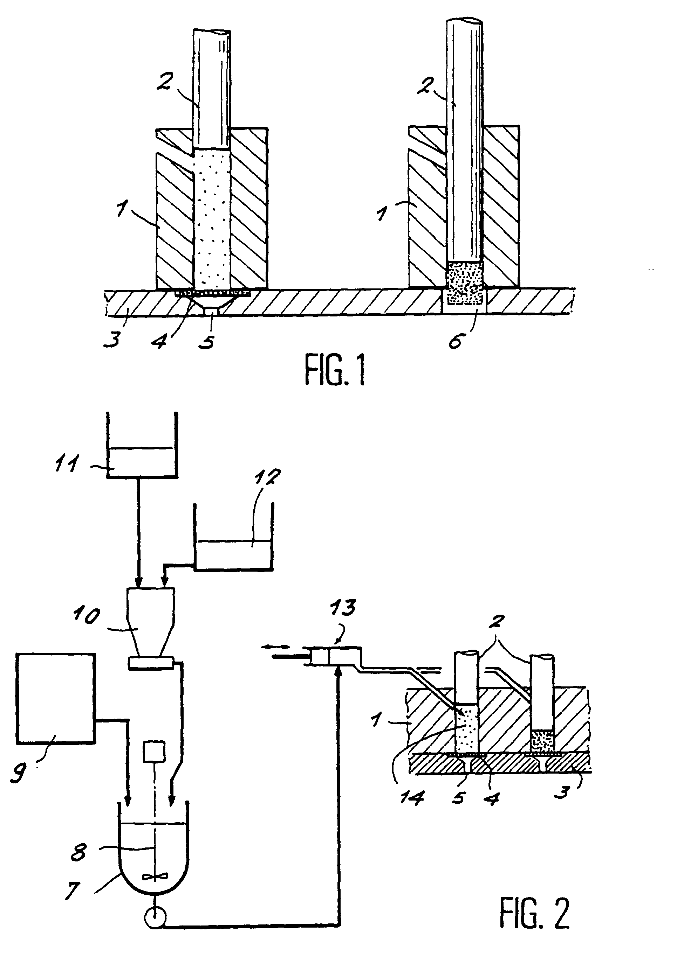

D'autres caractéristiques et avantages de l'invention sont donnés dans les exemples qui suivent et en se référant aux figures 1 et 2 qui représentent respectivement, sous forme schématique, un appareil de mesure de la retenue d'eau ρ de boues et un dispositif pour la mise en oeuvre du procédé de l'invention.

Exemple 1 : Détermination de la retenue d'eau ρ d'une boue.

On utilise l'appareillage suivant représenté sur la figure 1 : un bloc d'acier (1) percé d'un trou cylindrique, constitue un cylindre dans lequel peut coulisser un piston (2), et sur lequel on peut appliquer une pression (et la mesurer), grâce, par exemple à un vérin hydraulique.

Le bloc 1 est positionné sur une platine (3) qui comporte une rondelle en un matériau poreux (4), ajusté dans la masse de la platine.

Ce matériau doit se laisser traverser par de l'eau, mais non par des particules solides d'un diamètre supérieur à un diamètre minimal. On utilise par exemple de l'acier inoxydable fritté, ou du bronze fritté ou analogues, tel que le matériau commercialisé sous la marque PORALR par PECHINEY. La platine comporte également une tubulure (5), destinée à l'évacuation de l'eau.

La platine est aussi munie d'une ouverture cylindrique (6), d'un diamètre légèrement supérieur à celui du cylindre, destiné à permettre, le bloc 1 étant correctement positionné par rapport à cette ouverture, l'expulsion du contenu du cylindre, par le déplacement du piston.

La mesure se fait de la façon suivante :

1. mesure de la siccité : sur un échantillon de boue représentatif (masse de boue suffisante, homogénéité par agitation), on prélève une prise d'environ 100 g, soit P la masse de cette prise : la prise est placée dans un plateau préalablement séché. Le poids de l'ensemble est $P_o$. On introduit la prise (dans son plateau) dans un four chauffé à environ 70°C. On sèche ainsi la prise et on poursuit ce séchage jusqu'à ce que l'ensemble plateauprise conserve une masse constante.

Soit $P_1$, cette masse constante.

La siccité $s_o$ est

$$s_o = 1 - \frac{P_o - P_1}{P_o}$$

2. Extraction de l'eau : on introduit dans le cylindre 1 une prise effectuée sur l'échantillon de masse $P_o$ (en veillant toujours à ce qu'il soit homogène, toute sédimentation devant être évitée).

On applique au piston une pression convenue ($3 \times 10^7$ Pa ou plus, suivant les caractéristiques mécaniques de l'appareillage) ; on laisse s'écouler l'eau par la tubulure (5), et on extrait, par prolongement de la course du piston (2), le magma de boue comprimée. On pèse ce magma. Soit $P_1$, sa masse.

Ce magma est constitué de la matière sèche de la boue, soit $s_o$ par unité de masse de boue testée $B_o$, et de l'eau retenue, dans les conditions de la mesure, soit $\rho_o$ On a donc :

$$P_1 = P_o \, s_o \, (1 + \rho)$$

d'où

$$\rho = \frac{1}{s_O} \left( \frac{P_1}{P_O} - s_O \right)$$

On trouve ainsi, pour des boues de stations d'épuration d'eaux usées par traitement biologique, des valeurs de retenues allant de 2 à 6, en général, mais quelquefois supérieures.

Exemple 2 : Conditionnement de boues provenant d'eaux usées.

Ce processus comporte trois phases successives (étapes 2, 3 et 4) qui doivent obligatoirement être exécutées à l'intérieur du temps de prise du semi-hydrate.

1. Détermination de la quantité de semi-hydrate alpha à utiliser.

On traite une boue ayant un degré de siccité s = 0,03 et une retenue d'eau $\rho$ = 3,44 (pression appliquée $7 \times 10^7$ Pa).

La valeur minimale de quantité de semi-hydrate, comme indiquée plus haut est donnée par la relation

$$k_m = \frac{\rho}{0,7} = 4,9$$

L'addition de semi-hydrate alpha doit donc être d'au moins 4,9 fois le contenu en matière sèche de la boue.

La boue traitée, de siccité initiale s = 0,03, exige donc dans ce cas une consommation minimale théorique de 4,9 tonnes de semi-hydrate par tonne de matière sèche de boue soit, par tonne de boue, 0,147 tonne de semi-hydrate ($4,9 \times 0,03$).

La même boue, dont on aura amené la siccité à 0,06, par exemple, exigera $4,9 \times 0,06$ = 0,294 tonne de semi-hydrate par tonne de boue après épaississement.

Pour obtenir un produit fini présentant des caractéristiques mécaniques particulières, il peut être nécessaire d'utiliser une quantité de semi-hydrate alpha définie par une valeur de k supérieure à la valeur minimale $k_m$.

On procède alors, à plusieurs essais, par exemple à trois, qu'il est possible d'effectuer à l'aide de l'appareillage de mesure de $\rho$ décrit dans l'exemple 2, en utilisant des valeurs de 1,15 à 1,3 fois la valeur de $k_m$ et en fixant le temps séparant l'instant du mélange de celui de l'application de la pression à une valeur telle que la rétention d'eau du semi-hydrate soit égale à t'.

Par exemple un temps de séparation de 40 ou 25 minutes entraine une valeur de t', respectivement, de 0,20 ou 0,10.

Les essais, effectués avec t' = 0,1, conduisent à choisir dans cet exemple k' = 7,52 (k' étant la valeur de k, pour t = t'.

Calcul de $k'_2$

$$k'_2 = \frac{k'\tau - \rho}{\tau - t'}$$

où $\tau$ représente le taux de gâchage limite du semi-hydrate alpha et est égal à 0,7, k' est la quantité de semi-hydrate choisie pour le procédé, $\rho$ est la retenue d'eau de la boue et t' est la rétention d'eau du semi-hydrate.

En remplaçant chaque symbole par les valeurs qu'ils représentent, on obtient :

$$k'_2 = \frac{7,52 \times 0,7 - 3,44}{0,7 - 0,1} = \frac{1,824}{0,6} = 3,04$$

Calcul de $k_1$

$$k_1 = k' - k'_2 = 7,52 - 3,04 = 4,48$$

$$\rho\, 1 = k_1\tau = 3,136$$

$$\rho\, 2 = k'_2\, t' = 0,304 = c$$

$$\text{Vérification } \rho 1 + \rho\, 2 = 3,44$$

L'installation telle qu'elle est réglée, permet un temps d'attente de 56 minutes et donc d'atteindre une valeur t = 0,25.

On calcule alors $k_2$ suivant $k_2 t = k'_2 t' = c$, d'où

$$k_2 = \frac{c}{\tau}$$

ce qui donne

$$k_2 = \frac{0,304}{0,25} = 1,216$$

On calcule $k_1$ :

$$k_1 = k' - k'_2 = 7,52 - 3,04 = 4,48$$

et on trouve ainsi la quantité de semi-hydrate k à appliquer.

$$k = k_1 + k_2 = 4,48 + 1,216 = 5,696$$

soit k = 5,7

Dans_cet exemple on ajoutera à la boue du semi-hydrate alpha, en quantité telle que k = 5,7.

Si la boue a une siccité s, à l'unité de masse de boue, on mélangera une masse de semi-hydrate égale à

$$P = 5,7\, s$$

c'est-à-dire si la siccité de la boue est $s_1$ = 0,03, on ajoutera 5,7 x 0,03 = 0,171 tonne de semi-hydrate alpha pour 1 tonne de boue, et si la siccité de la boue est $s_2$ = 0,05, on ajoutera 5,7 x 0,05 = 0,285 tonne de semi-hydrate alpha pour une tonne de boue.

Le mélange de boue et de semi-hydrate doit impérativement être conservé en un état homogène, les éléments solides, en particulier les grains de semi-hydrate, devant rester régulièrement répartis dans la masse du mélange.

Tout risque de sédimentation du mélange doit être évité, afin que le début d'hydratation du semi-hydrate s'effectue sans produire, par endroit et de façon aléatoire, des magmas pris en masse.

En même temps, cette homogénéisation du mélange permet d'éviter les risques de bouchage des éléments de l'installation (coudes de tuyauteries, vannes, pompes, etc...).

Une agitation légère doit donc être appliquée au mélange.

2. Injection du mélange

Le mélange est injecté dans la ou les chambres de compactage, en position d'attente, c'est-à-dire, à leur volume disponible maximal.

La quantité de mélange injectée est en volume égale au volume maximal utile des chambres de compactage. La capacité de traitement d'une chambre de compactage, comptée en masse de matière sèche constituant la boue, dépend donc de la siccité de la boue traitée.

Dans une variante de réalisation de l'invention, on utilisera en amont de l'installation, un épaississeur de boue. La limite supérieure de siccité est, en fait, dominée par la fluidité minimale admise pour le mélange, après temps d'attente choisi comme maximum, vis-à-vis des facilités de manipulation du mélange (tuyauterie, pompes, vannes, etc...).

3. Compactage par application d'une pression.

La pression est établie immédiatement après cette injection qui n'exige qu'un temps bref de l'ordre d'une fraction de seconde.

Elle est maintenue jusqu'à l'arrêt de l'expulsion de l'eau. La pression appliquée et les dispositions mécaniques sont telles que cette expulsion d'eau exige un temps aussi bref que possible, de l'ordre de 1 à 2 secondes.

A ce stade, le produit fini est constitué, moulé par les chambres de compactage, dans leur position correspondant à la position du piston, en présence du produit dans les chambres, sous la pression d'utilisation. Le produit ainsi mis en forme est récupéré.

On a vu que l'augmentation du temps séparant l'instant du mélange de celui de l'application de la pression a pour conséquence une diminution de la quantité de semi-hydrate consommé, pour obtenir une même performance en caractéristiques mécaniques du produit fini, donc à qualité égale du conditionnement.

Ce temps d'attente est cependant limité :

- par l'épaississement du mélange : cet effet peut être corrigé par la diminution de la siccité de la boue traitée, c'est-à-dire, par exemple, un épaississement préalable au mélange, éventuel, moins important ; ces choix sont régis par des considérations économiques
- et, de toute façon, par le temps de fin de prise du semi-hydrate.

Ainsi, le compactage, c'est-à-dire l'application de la pression au mélange semi-hydrate-boue, doit être impérativement exécuté, pendant le phénomène d'hydratation du semi-hydrate, avant son temps de fin de prise.

Il convient, pour une bonne performance économique du procédé, que le compactage soit exécuté en un temps le plus long possible après le mélange, tout en restant donc inférieur soit au temps au bout duquel la fluidité du mélange créerait des difficultés de manutention, soit, en tout cas, au temps de fin de prise du semi-hydrate.

4. Récupération du produit fini et expulsion d'eau.

Juste après l'application de la pression, les chambres de compactage sont mises en position, sur la platine les soutenant, au-dessus des orifices prévus d'un diamètre légèrement supérieur à celui du produit fini, moulé sous forme d'un comprimé.

Le comprimé est alors expulsé par la prolongation de la course des pistons, commandée par une application de pression de la même façon que lors du compactage.

A titre d'illustration de ce qui précède on rapporte ci-après des exemples d'application du procédé de l'invention réalisés à l'aide de l'appareillage schématisé sur la figure 2.

Cet appareillage comporte des chambres de compactage telles que représentées sur la figure 1. Les mêmes références sont utilisées pour désigner les mêmes éléments. Ces chambres de compactage font partie d'un ensemble comprenant un récipient mélangeur (7) muni d'un système à agitation lente (8) afin d'éviter toute sédimentation et d'assurer l'homogénéité du mélange et la répartition régulière du semi-hydrate.

Ce mélangeur est alimenté en semi-hydrate à partir du système (9) et en boue à partir d'un épaississeur (10) relié à un système d'alimentation en boue (11).

L'utilisation d'un épaississeur n'est pas obligatoire et doit, de toute façon, être limitée à l'obtention de siccités au plus égales à 0,09 environ.

Au cours du processus, et, par exemple, au moment du passage dans l'épaississeur, il est possible d'incorporer, à l'aide du système d'alimentation (12), si on le souhaite, des additifs susceptibles de conférer un intérêt particulier à la matière de la boue.

Le mélange de boue et de semi-hydrate est alors injecté à l'aide de pompes (13) dans les chambres de compactage.

Le mélange injecté (14) est comprimé à l'aide des pistons 2 et les comprimés formés sont expulsés par les ouvertures de la platine (voir figure 1) en déplaçant le bloc 1 afin de le faire coïncider avec ces ouvertures.

Les essais effectués à l'aide de cet appareillage ont été réalisés dans les conditions suivantes :

- pression : 630 x $10^5$ Pa,
- chambres de compactage : 16 mm de diamètre avec un volume maximum utile de 12 cm3,
- semi-hydrate alpha obtenu par fabrication en autoclave, présentant un début de prise - couteau de 25 mn et une granulométrie inférieure à 1 mm,
- temps d'attente (fabrication) de 45 min,
- retenue d'eau du semi-hydrate 0,25 à 50 minutes.

| Boue | A | B | C |
|---|---|---|---|
| Siccité | 0,06 | 0,09 | 0,08 |
| Calcul de $\rho$ | | | |
| $P_o$ g | 10 | 10 | 10 |
| $P_1$ g | 2,65 | 4,65 | 3,4 |
| $P_1/P_o$ | 0,265 | 0,465 | 0,340 |
| $P_1/P_o$-s | 0,205 | 0,375 | 0,260 |
| $\rho$ | 3,40 | 4,17 | 3,25 |
| $k_m$ | 4,86 | 5,96 | 4,64 |
| k'(t=0,1) | 7,5 | 7,5 | 5,5 |
| $k'_2$ | 3,02 | 1,08 | 1 |
| $k_1$ | 4,48 | 6,42 | 4,5 |
| c | 0,302 | 0,108 | 0,1 |
| $k_2$ (t=0,25) | 1,208 | 0,432 | 0,4 |
| k (t=0,25) | 5,69 | 6,85 | 4,9 |
| essais de fabrication réalisés avec k et temps attente 45 min | 5,7 | 7 | 5 |

On obtient dans chaque cas des comprimés de consistance rigide, qui sont donc facilement manipulables.

<u>Exemple 3</u> : Utilisation de semi-hydrate en pulpe dans le procédé de l'invention.

Pour des raisons de facilité de manutention, on utilise une pulpe de semi-hydrate alpha, de concentration de 700 g/l environ.

Pour réaliser une addition de semi-hydrate en quantité égale à l'unité de masse, on ajoutera simplement une masse de pulpe, calculée en tenant compte de la densité de la pulpe à la concentration en semi-hydrate, soit pour une concentration de 700 g/l, environ 1,85 unité de masse de pulpe pour l'unité de masse de semi-hydrate.

L'addition de semi-hydrate sous forme de pulpe entraine, par rapport à la réalisation du mélange à partir du produit en poudre, sec, une diminution de la teneur en matières sèches (matières sèches de la boue et du semi-hydrate) du mélange.

Il peut donc être souhaitable d'épaissir au préalable la boue de manière appropriée.

Pour éviter une diminution de la capacité de traitement unitaire des chambres de compactage, les mélanges traités étant moins riches en matières sèches, on augmentera avantageusement leur volume maximum utile. Dans le cas de l'utilisation d'une pulpe à 700 g/l de semi-hydrate, utilisée pour le traitement d'une boue de siccité 0,06 avec k = 4, par exemple, le volume maximum utile des chambres devra être multiplié par environ 1,2, pour conserver la capacité unitaire de traitement à partir de semi-hydrate en poudre.

## Revendications

1. Procédé de conditionnement de boues, comprenant la mise en oeuvre de sulfate de calcium semi-hydrate alpha, **caractérisé par** les étapes

   - de mélange de la boue à traiter avec une masse P de semi-hydrate alpha au moins égale, par rapport à l'unité de masse de la boue, à celle donnée par la relation

   $$P = k_m s$$

   dans laquelle s, représente la siccité de la boue et $k_m$ représente la quantité minimale de semi-hydrate, cette quantité étant obtenue en mesurant la retenue $\rho$ d'eau de la boue à une pression choisie à titre de référence, par exemple de 3 x $10^7$ Pa ou plus, et en utilisant la relation

   $$k_m = \frac{\rho}{0,7}$$

   étant entendu que la quantité de semi-hydrate doit être inférieure à 10 fois le poids de la matière sèche contenue dans la boue, et que le temps séparant la mise en contact de la boue et du semi-hydrate alpha lors de l'étape de mélange, de la fin du processus, est inférieure au temps de prise du semi-hydrate.

   - d'injection du mélange homogène de semi-hydrate et de boue dans un dispositif comportant au moins une chambre de compactage permettant l'application d'une pression au mélange introduit et l'évacuation d'eau,
   - d'application d'une pression pour compacter le mélange et expulser l'eau, en opérant avantageusement selon les conditions utilisées pour déterminer $\rho$,
   - de récupération du produit mis en forme par le compactage,

   le temps séparant la mise en contact de la boue et du semi-hydrate lors de l'étape de mélange, de la fin du compactage étant inférieur au temps de prise du semi-hydrate.

2. Procédé selon la revendication 1, **caractérisé en ce qu'**on utilise le semi-hydrate alpha en léger excès par rapport à la quantité minimale $k_m$.

3. Procédé selon la revendication 2, **caractérisé en ce qu'**on utilise le semi-hydrate selon un excès correspondant à une valeur de k pouvant aller jusqu'à 1,5 fois la valeur de $k_m$.

4. Procédé selon l'une des revendications précédentes, **caractérisé par le fait qu'**on utilise du semi-hydrate sous forme de pulpe.

5. Procédé selon la revendication 4, **caractérisé par le fait qu'**on utilise une pulpe de semi-hydrate issue de gypse résiduaire.

## Patentansprüche

1. Verfahren zum Konditionieren von Schlämmen, umfassend die Anwendung von Calciumsulfat-$\alpha$-hemihydrat, **gekennzeichnet durch** die folgenden Stufen:

   - Mischen des zu behandelnden Schlammes mit einer Masse P an $\alpha$-Hemihydrat, die, bezogen auf die Masseeinheit des Schlammes, wenigstens jener entspricht, die **durch** die Beziehung

$$P = k_m s$$

gegeben ist, worin s den Trockengehalt des Schlammes darstellt und $k_m$ die Mindestmenge an Hemihydrat bedeutet, wobei diese Menge **durch** Messen des Rückhaltegrades $\rho$ des Schlammes bei einem zu Vergleichszwecken gewählten Druck, beispielsweise von 3 x $10^7$ Pa oder darüber, und unter Anwendung der Beziehung

$$k_m = \frac{\rho}{0{,}7}$$

erhalten wird, wobei die Hemihydratmenge unter dem Zehnfachen des Gewichtes des im Schlamm enthaltenen Trockenmaterials liegen muß und die Zeit zwischen dem Inkontaktbringen des Schlammes mit dem $\alpha$-Hemihydrat beim Mischen und dem Ende des Verfahrens unter der Abbindezeit des Hemihydrats liegt,

- Injizieren des homogenen Gemisches aus Hemihydrat und Schlamm in eine Anlage, die wenigstens eine Verdichtungskammer umfaßt, worin auf das eingebrachte Gemisch ein Druck aufgebracht und Wasser abgeführt werden kann,
- Aufbringen eines Drucks zum Verdichten des Gemisches und Austreiben von Wasser, wobei vorteilhaft unter den zur Bestimmung von $\rho$ angewandten Bedingungen gearbeitet wird,
- Gewinnen des **durch** das Verdichten in Form gebrachten Produktes, wobei die Zeit zwischen dem Inkontaktbringen des Schlammes mit dem Hemihydrat beim Mischen und dem Ende des Verdichtens unter der Abbindezeit des Halbhydrates liegt.

2. Verfahren nach Anspruch 1, **dadurch gekennzeichnet, daß** man das $\alpha$-Hemihydrat in geringem Überschuß, bezogen auf die Mindestmenge $k_m$, verwendet.

3. Verfahren nach Anspruch 2, **dadurch gekennzeichnet, daß** man das Hemihydrat in einem Überschuß verwendet, der einem Wert von k entspricht, der bis zum 1,5-fachen des Wertes von $k_m$ betragen kann.

4. Verfahren nach einem der vorstehenden Ansprüche, **dadurch gekennzeichnet, daß** man das Hemihydrat in Form einer Pulpe verwendet.

5. Verfahren nach Anspruch 4, **dadurch gekennzeichnet, daß** man eine von Abfallgips stammende Hemihydratpulpe verwendet.

## Claims

1. Method for processing sludges, comprising the use of alpha hemihydrate calcium sulphate, **characterised by** the stages

- of mixing the sludge to be treated with a mass P of alpha hemihydrate at least equal with respect to the unit mass of the sludge, to that given by the relationship

$$P = k_m s$$

in which s, represents the dryness of the sludge and $k_m$ represents the minimum quantity of hemihydrate, this quantity being obtained by measuring the water retention $\rho$ of water in the sludge at a pressure chosen as a reference, for example 3 x $10^7$ Pa or more, and by using the relationship

$$km = \frac{\rho}{0.7}$$

it being understood that the quantity of hemihydrate must be less than 10 times the weight of the dry matter contained in the sludge, and that the time between placing the sludge and the alpha hemihydrate in contact during the mixing stage, and the end of the process, is less than the setting time of the hemihydrate.
- of injecting the homogenous mixture of hemihydrate and sludge into a device comprising at least one compacting chamber allowing the application of pressure to the mixture introduced and the evacuation of water,

- of applying pressure to compact the mixture and expel the water, by advantageously operating according to the conditions used to determine ρ,
- of recovering the product formed by the compaction,
  the time between placing the sludge and the hemihydrate in contact during the mixing stage and the end of compaction being less than the setting time of the hemihydrate.

2. Method according to claim 1, **characterised in that** a slight excess of the alpha hemihydrate is used in respect to the minimum quantity $k_m$.

3. Method according to claim 2, **characterised in that** the hemihydrate is used in an excess corresponding to a value of k which can range up to 1.5 times the value of $k_m$.

4. Method according to one of the previous claims, **characterised in that** the hemihydrate is used in the form of a pulp.

5. Method according to claim 4, **characterised in that** a hemihydrate pulp originating from waste gypsum is used.

EP 0 742 784 B1

FIG. 1

FIG. 2